(19)

Europäisches Patentamt

European Patent Office

Office européen des brevets

(11)     **EP 4 596 724 A1**

(12)     **EUROPEAN PATENT APPLICATION**
published in accordance with Art. 153(4) EPC

(43) Date of publication:
06.08.2025  Bulletin 2025/32

(21) Application number: 23872757.2

(22) Date of filing: 01.08.2023

(51) International Patent Classification (IPC):
*C21C 7/00* (2006.01)    *C21C 7/06* (2006.01)
*C21C 5/52* (2006.01)    *C21C 1/06* (2006.01)
*C21B 5/04* (2006.01)    *C21B 5/02* (2006.01)

(52) Cooperative Patent Classification (CPC):
C21B 5/02; C21B 5/04; C21C 1/06; C21C 5/52;
C21C 7/00; C21C 7/06; Y02P 10/20

(86) International application number:
**PCT/KR2023/011203**

(87) International publication number:
**WO 2024/071633 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.09.2022  KR 20220124392
29.09.2022  KR 20220124468
29.09.2022  KR 20220124521
29.09.2022  KR 20220124555
29.09.2022  KR 20220124571
29.09.2022  KR 20220124602

(71) Applicant: **Hyundai Steel Company
Incheon 22525 (KR)**

(72) Inventors:
• **CHOI, Jae Youn**
  **Incheon 22525 (KR)**
• **KANG, Ji Su**
  **Incheon 22525 (KR)**
• **SONG, Dong Seok**
  **Incheon 22525 (KR)**

• **HONG, Jin Myung**
  **Incheon 22525 (KR)**
• **KIM, Jong Deok**
  **Incheon 22525 (KR)**
• **AN, Hyo Jong**
  **Incheon 22525 (KR)**
• **LEE, Kyeong Uk**
  **Incheon 22525 (KR)**
• **SONG, Byung Ju**
  **Incheon 22525 (KR)**
• **KIM, Hai Gon**
  **Incheon 22525 (KR)**
• **PARK, Ji Won**
  **Incheon 22525 (KR)**
• **KIM, Hyung Gkeun**
  **Incheon 22525 (KR)**
• **PARK, Chan Woo**
  **Incheon 22525 (KR)**

(74) Representative: **Viering, Jentschura & Partner
mbB
Patent- und Rechtsanwälte
Am Brauhaus 8
01099 Dresden (DE)**

(54)     **METHOD FOR MANUFACTURING STEEL**

(57)     A method for manufacturing steel according to an embodiment of the present invention comprises the steps of: preparing a first molten metal manufactured using a first raw material including iron ore and a second molten metal manufactured using a second raw material including iron scrap; mixing the first molten metal and the second molten metal to manufacture a third molten metal; adjusting components of the third molten metal to manufacture a fourth molten metal; and manufacturing a product by processing the fourth molten metal.

Processed by Luminess, 75001 PARIS (FR)

**(Cont. next page)**

【FIG. 1】

| | |
|---|---|
| PREPARE FIRST MOLTEN METAL AND SECOND MOLTEN METAL | S100 |
| MIX FIRST MOLTEN METAL AND SECOND MOLTEN METAL | S200 |
| ADJUST COMPONENTS OF THIRD MOLTEN METAL | S300 |
| MANUFACTURE PRODUCT | S400 |

## Description

### Field of the Invention

The present invention relates to a method of manufacturing steel.

### Discussion of Related Art

Generally, there are two methods of manufacturing steel: a blast furnace-converter process and an electric arc furnace process.

The blast furnace-converter process includes a process of charging iron ore and bituminous coal (e.g. coke) into a blast furnace and melting them with hot air to produce molten iron and a process of charging the molten iron produced from the blast furnace into a converter to remove impurities such as carbon and the like to manufacture molten steel.

The electric arc furnace process involves melting iron scrap (steel scrap) in an electric arc furnace (EAF) to manufacture molten steel.

The molten steel manufactured by the two methods described above is made into a semi-finished product through a continuous casting process, and the semi-finished product is made into a finished product through a subsequent rolling process.

Meanwhile, in recent years, rapid climate change due to greenhouse gases emitted from various industrial sectors has recently become a hot international issue.

Carbon dioxide is a representative greenhouse gas. The steel industry is known as an industry with a high proportion of carbon dioxide emissions among various industries.

For example, the blast furnace-converter process emits a large amount of carbon dioxide because it utilizes carbon monoxide (CO) produced by the combustion of coke as a reducing agent.

Accordingly, major steel companies are making great efforts and conducting research and development to reduce the amount of carbon dioxide emitted during the steelmaking process in accordance with the international trends and regulations of each country.

### Description of the Invention

### Technical Problem

In order to solve the above problems, the purpose of the present invention is directed to providing a method of manufacturing steel capable of reducing the amount of carbon dioxide emissions generated during the steelmaking process.

In particular, the present invention is directed to providing a method of manufacturing steel capable of reducing the amount of carbon dioxide emissions using existing steelmaking facilities.

The problems of the present invention are not limited to the problems mentioned above, and other problems not mentioned will be clearly understood by those skilled in the art from the following description.

### Technical Solution

A method of manufacturing steel according to an embodiment of the present invention includes a step of preparing a first molten metal manufactured using a first raw material including iron ore and a second molten metal manufactured using a second raw material including iron scrap; a step of mixing the first molten metal and the second molten metal to manufacture a third molten metal; a step of adjusting components of the third molten metal to manufacture a fourth molten metal; and a step of manufacturing a product by processing the fourth molten metal.

Here, the step of preparing the first molten metal may include a step of melting the first raw material in a blast furnace to manufacture the first molten metal, a step of charging the first molten metal into a first transport vehicle, and a step of moving the first transport vehicle.

The step of preparing the second molten metal may include a step of melting the second raw material in an electric arc furnace (EAF) to manufacture the second molten metal, and a step of selectively adding a carbonizing agent depending on whether the second molten metal has solidified.

In addition, the step of manufacturing the third molten metal may include a step of charging the first molten metal into a mixing ladle having an open top and a defined space therein, and a step of charging the second molten metal into the mixing ladle.

According to one embodiment of the present invention, the step of preparing the second molten metal may further include a step of charging the second molten metal into a first ladle having an open top and a defined space therein before adding the carbonizing agent.

According to one embodiment of the present invention, the step of preparing the second molten metal may further include a step of charging the second molten metal into a first ladle having an open top and a defined space therein after adding the carbonizing agent.

According to one embodiment of the present invention, in the step of adding the carbonizing agent, Ta is defined as a temperature of the second molten metal at the time of measurement, Tf is defined as a solidification temperature of the second molten metal depending on a carbon content, $\Delta$Tc is defined as a temperature change amount in which the second molten metal is cooled from the time of measurement to the time of mixing the first molten metal and the second molten metal, and when Ta + $\Delta$Tc $\leq$ Tf is satisfied, the carbonizing agent may be added to the second molten metal.

According to one embodiment of the present invention, in the step of adding the carbonizing agent, after adding the carbonizing agent, a solidification temperature of the second molten metal may be Ta + $\Delta$Tc or less.

According to one embodiment of the present invention, the step of preparing the second molten metal may further include a step of adding a deoxidizer to the second molten metal.

According to one embodiment of the present invention, the third molten metal may include 15 to 50 wt% of the second molten metal and the first molten metal as the remainder.

According to one embodiment of the present invention, a method includes a step of preparing a first molten metal containing carbon and a second molten metal containing carbon at a lower concentration than the first molten metal, a step of mixing the first molten metal and the second molten metal to manufacture a third molten metal, a step of adjusting components of the third molten metal to manufacture a fourth molten metal, and a step of manufacturing a product by processing the fourth molten metal

Here, the step of preparing the first molten metal may include a step of charging the first molten metal into a first transport vehicle, and a step of moving the first transport vehicle.

The step of preparing the second molten metal may include a step of selectively adding a carbonizing agent depending on whether the second molten metal has solidified.

The step of manufacturing the third molten metal may include a step of charging the first molten metal into a mixing ladle having an open top and a defined space therein, and a step of charging the second molten metal into the mixing ladle.

According to one embodiment of the present invention, a carbon content of the first molten metal may be 2 wt% or more, and a carbon content of the second molten metal may be 2 wt% or less.

According to one embodiment of the present invention, the first molten metal may be manufactured by melting a raw material including iron ore in a blast furnace, and the second molten metal may be manufactured by melting a raw material including iron scrap in an electric arc furnace (EAF).

According to one embodiment of the present invention, the step of preparing the second molten metal may further include a step of charging the second molten metal into a first ladle having an open top and a defined space therein before adding the carbonizing agent.

According to one embodiment of the present invention, the step of preparing the second molten metal may further include a step of charging the second molten metal into a first ladle having an open top and a defined space therein after adding the carbonizing agent.

According to one embodiment of the present invention, the step of preparing the second molten metal may further include a step of adding a deoxidizer to the second molten metal.

According to one embodiment of the present invention, the third molten metal may include 15 to 50 wt% of the second molten metal and the first molten metal as the remainder.

According to one embodiment of the present invention, the step of adding the carbonizing agent may be adjusted so that the solidification temperature of the second molten metal is lower than the measurement temperature of the second molten metal at the time of mixing the first molten metal and the second molten metal.

A method of manufacturing steel according to one embodiment of the present invention includes a step of melting iron ore in a blast furnace to prepare a first molten metal, a step of melting iron scrap in an electric arc furnace to prepare a second molten metal, a step of adding a carbonizing agent to the second molten metal, a step of mixing the first molten metal and the second molten metal to manufacture a third molten metal, a step of adjusting components of the third molten metal to manufacture a fourth molten metal, and a step of manufacturing a product by processing the fourth molten metal.

The step of preparing the first molten metal may include a step of charging the first molten metal into a first transport vehicle, and a step of moving the first transport vehicle.

The step of manufacturing the third molten metal may include a step of charging the first molten metal into a mixing ladle having an open top and a defined space therein, and a step of charging the second molten metal into the mixing ladle.

**Advantageous Effects**

A method of manufacturing steel according to one embodiment of the present invention can significantly reduce an amount of carbon dioxide emissions generated during the steelmaking process by manufacturing steel by mixing a second molten metal (i.e., molten steel) with a first molten metal in an electric arc furnace, which emits relatively less carbon dioxide than the first molten metal (i.e., molten iron) produced in a blast furnace.

A method of manufacturing steel according to one embodiment of the present invention can prevent the problem of solidification of the second molten metal before the first molten metal and the second molten metal are mixed by raising the temperature of the second molten metal or adding a carbonizing agent.

A method of manufacturing steel according to one embodiment of the present invention can prevent explosions or overflow phenomena that may occur when the first molten metal and the second molten metal are mixed by adding a deoxidizer to the second molten metal.

**Brief Description of the Drawings**

FIG. 1 is a flow chart showing a method of manufacturing steel according to one embodiment of the present invention.

FIG. 2 is a flow chart showing the steps of preparing the first molten metal and the second molten metal shown in FIG. 1 and the step of mixing the first molten metal and the second molten metal.

FIGS. 3 to 5 are drawings showing various embodiments of the step of preparing the second molten metal shown in FIG. 2.

FIGS. 6 and 7 are drawings showing various embodiments of the step of preparing the second molten metal shown in FIG. 2.

FIGS. 8 to 10 are drawings showing various embodiments of the step of mixing the first molten metal and the second molten metal shown in FIG. 1.

**Description of Exemplary Embodiments**

All terms (including technical and scientific terms) used in the present specification have the same meaning as generally understood by one of ordinary skill in the art to which the present invention belongs.

In addition, terms defined in generally used dictionaries, such as terms defined in the present specification, should be interpreted as having a meaning consistent with their meaning in the context of the relevant technology, and unless interpreted in an idealized or overly formal sense, are explicitly defined herein.

Hereinafter, embodiments of the present invention will be described in detail with reference to the drawings.

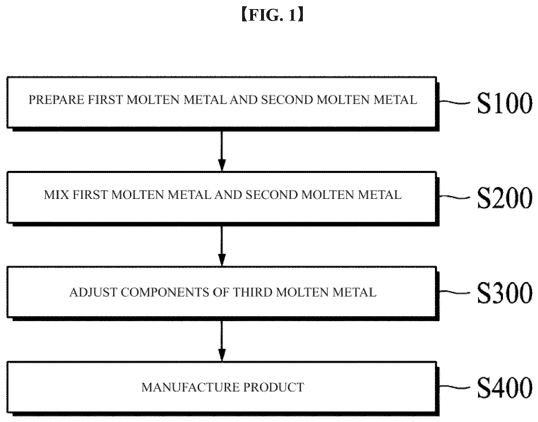

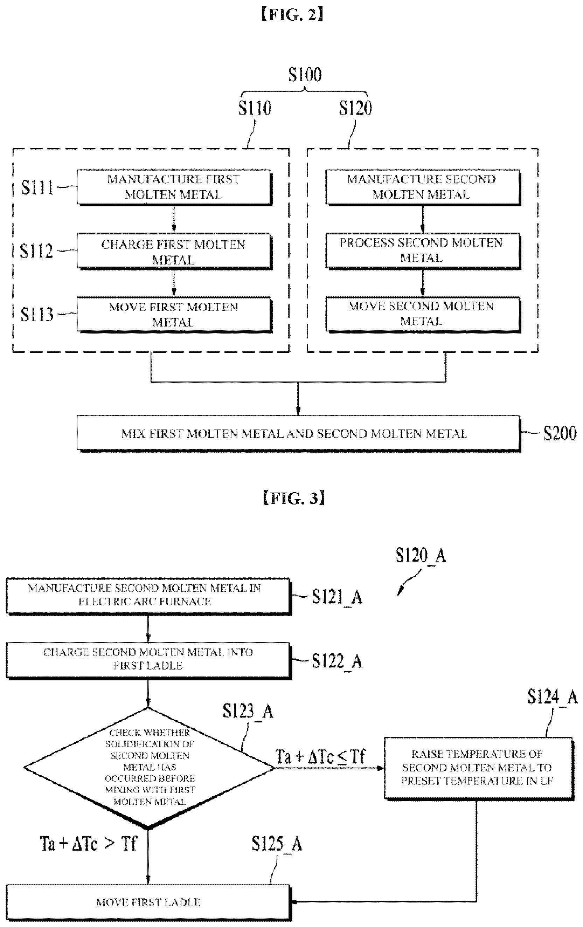

FIG. 1 is a flow chart showing a method of manufacturing steel according to one embodiment of the present invention. FIG. 2 is a flow chart showing the steps of preparing the first molten metal and the second molten metal shown in FIG. 1 and the step of mixing the first molten metal and the second molten metal.

Referring to FIG. 1, the method of manufacturing steel according to one embodiment of the present invention refers to a process for manufacturing a steel product by extracting iron from raw materials such as iron ore, iron scrap (steel scrap), or the like.

The method of manufacturing steel according to one embodiment of the present invention includes a step of preparing a first molten metal and a second molten metal (S100), a step of mixing the first molten metal and the second molten metal (S200), a step of adjusting the components of a third molten metal (S300), and a step of manufacturing a product (S400).

Referring to FIG. 2, the step of preparing the first molten metal and the second molten metal (S100) includes a step of preparing the first molten metal (S110) and a step of preparing the second molten metal (S120).

Specifically, the step of preparing the first molten metal (S110) may include a step of manufacturing the first molten metal (S111), a step of charging the first molten metal (S112), and a step of moving the first molten metal (S113).

For example, the first molten metal may be manufactured using a first raw material including iron ore.

Specifically, in the step of manufacturing the first molten metal (S111), iron ore and coke are charged into a blast furnace. Next, hot air may be injected into the blast furnace to reduce and melt the iron ore, thereby manufacturing the first molten metal.

That is, the first molten metal may be molten iron. A carbon content of the first molten metal may be 2 wt% or more based on the weight of the first molten metal.

However, a method of manufacturing the first molten metal is not limited to what has been described above. For example, it may be possible to utilize hydrogen gas as a reducing agent instead of coke, or to input the first raw material into the blast furnace in the form of reduced iron (e.g., DRI, HBI, and the like).

In the step of charging the first molten metal (S112), the first molten metal produced in the blast furnace may be transferred to a first transport vehicle. The first transport vehicle may be a torpedo ladle car (TLC).

However, the first transport vehicle is not limited thereto, and the first transport vehicle may be an open ladle car (OLC).

In the step of moving the first molten metal (S113), the first transport vehicle into which the first molten metal has been charged may be moved to the vicinity of the subsequent converter equipment.

The step of preparing the second molten metal (S120) may include a step of preparing the second molten metal, a step of processing the second molten metal, and a step of moving the second molten metal.

In the step of processing the second molten metal, whether the second molten metal has solidified may be determined to either raise the temperature of the second molten metal or add a carbonizing agent.

Hereinafter, the step of preparing the second molten metal (S120) will be described in more detail.

In the present specification, Ta is defined as a temperature of the second molten metal at the time of measurement. Here, a measurement time point refers to a time point when the temperature of the second molten metal is first measured to determine whether the second molten metal has solidified.

Tf is defined as a solidification temperature of the second molten metal depending on a carbon content. For example, Tf satisfies the following Equation 1.

$$[\text{Equation 1}: Tf = 1536.6\ (°C) - \{88 \times C\ wt\%\}(°C)]$$

ΔTc is defined as the temperature change of the second molten metal. Specifically, ΔTc refers to a temperature change amount of the second molten metal according to the time S required from the initial measurement time to the time of mixing the first molten metal and the second molten metal. For example, ΔTc satisfies the following Equation 2.

$$[\text{Equation 2}: \triangle Tc = -1\ (°C/min) \times S\ (min)]$$

The units of Ta, Tf, and ΔTc are °C. ΔTc is a negative number.

FIGS. 3 to 7 are drawings showing various embodiments of the step of preparing the second molten metal shown in FIG. 2.

In the steps of preparing the second molten metal as shown in FIGS. 3 to 5 (S120_A, S120_B, 120_C), the temperature of the second molten metal may be raised to prevent solidification of the second molten metal.

Referring to FIG. 3, the step of preparing the second molten metal (S120_A) includes the step of preparing the second molten metal (S121_A), the step of charging the second molten metal (S122_A), the step of checking whether solidification has occurred (S123_A), and the step of moving the second molten metal (S125_A).

In the step of preparing the second molten metal (S121_A), an electric arc furnace (EAF) may be utilized.

For example, second raw materials including ore-based iron materials (OBMs) based on iron ore and iron scrap may be melted in the electric arc furnace to produce molten iron.

Specifically, the second raw material may include hot briquetted iron (HBI) and iron scrap. For example, on a weight percent basis, the second raw material may include 60% HBI and 40% iron scrap. However, this is an exemplary content ratio, and the present invention is not limited thereto.

In step (S121_A), the second raw material may be input into the electric arc furnace. There may be residual molten metal inside the electric arc furnace. For example, the capacity of the residual molten metal may be about 60 to 70 percent of the capacity of the electric arc furnace. In addition, the solubility of the residual molten metal may be 70 to 80%.

In the present embodiment, HBI may be stably dissolved using the residual molten metal inside the electric arc furnace. In addition, the solubility of the residual molten metal may be adjusted to 70 to 80% to prevent the phenomenon of slag overflowing during the HBI input stage.

When the amount of residual molten metal present inside the electric arc furnace is less than a preset amount, the amount of residual molten metal may be adjusted within the preset range by preferentially melting iron scrap among the second raw materials.

In addition, when the solubility of the residual molten metal inside the electric arc furnace is higher than a preset value, the solubility of the residual molten metal may be adjusted within a preset range by inputting iron scrap among the second raw materials.

In step (S121_A), HBI among the second raw materials may be input multiple times. Through this, HBI may be dissolved more stably.

The second molten metal may be manufactured as the second raw material is melted inside the electric arc furnace. That is, the second molten metal may be molten steel. A carbon content of the second molten metal may be 2 wt% or less based on the weight of the second molten metal.

However, the ore-based iron source included in the second raw material is not limited to HBI, and the ore-based iron source may be DRI and the like.

In the step of charging the second molten metal (S122_A), the second molten metal melted in the electric arc furnace may be charged into a first ladle. The first ladle may be a vessel having an open top and a defined space therein. A refractory layer may be disposed in the inner space of the first ladle.

In the step of checking whether solidification has occurred (S123_A), the temperature of the second molten metal is measured to check whether solidification of the second molten metal has started before it is mixed with the first molten metal.

The step of checking whether solidification has occurred (S123_A) may be performed by a program controlling the equipment.

When $Ta + Tc \leq \Delta T$ is satisfied in step (S123_A), solidification of the second molten metal may start before it is mixed with the first molten metal.

In this case, a step of raising the temperature of the second molten metal (S124_A) is performed. Step (S124_A) may be performed by a ladle furnace (LF) refining machine.

Specifically, step (S124_A) moves the first ladle to the LF refining machine, and then utilizes the arc heat of the LF refining machine to raise the temperature of the second molten metal to a temperature higher than $Tf - \Delta Tc$.

In other words, step (S124_A) raises the temperature of the second molten metal so that the temperature of the second molten metal at the time of mixing the first molten metal and the second molten metal is higher than the solidification temperature of the second molten metal.

In the step of moving the second molten metal (S125_A), the first ladle accommodating the second molten metal whose temperature has been raised is moved. For example, the first ladle may be moved to the vicinity of the electric arc furnace equipment.

When $Ta + \Delta Tc > Tf$ is satisfied, it is determined that the second molten metal will not solidify before being mixed with the first molten metal, and the step of moving the second molten metal (S125_A) may be performed without going through the step of raising the temperature of the second molten metal (S124_A).

According to one embodiment of the present invention, the step of preparing the second molten metal (S120_A) may further include a step of adding a deoxidizer to the second molten metal.

The step of adding a deoxidizer may be performed simultaneously with the step of charging the second molten metal (S122_A).

The deoxidizer may remove oxygen contained in the second molten metal. The deoxidizer may include an element that is highly reactive with oxygen. For example, the deoxidizer may be a ferroalloy including at least one element of silicon, manganese, and aluminum.

An input amount of the deoxidizer may be determined by the amount of oxygen in the second molten metal. For example, the input amount of the deoxidizer may be determined by the following Equations 4 to 6 depending on the contained elements.

Weight of oxygen contained in second molten metal (kg) X {aluminum molecular weight in Al2O3 (54) / oxygen molecular weight (48)}]  [Equation 4:

[Equation 5: Weight of oxygen contained in second molten metal (kg) X {silicon molecular weight in SiO2 (28) / oxygen molecular weight (32)}]  [Equation 5:

Weight of oxygen contained in second molten metal (kg) X {manganese molecular weight in MnO (55) / oxygen molecular weight (16)}]  [Equation 6:

Hereinafter, embodiments other than the above-described embodiments will be described. For convenience of explanation, duplicate descriptions of the same configuration as the above-described embodiment are omitted in the following description.

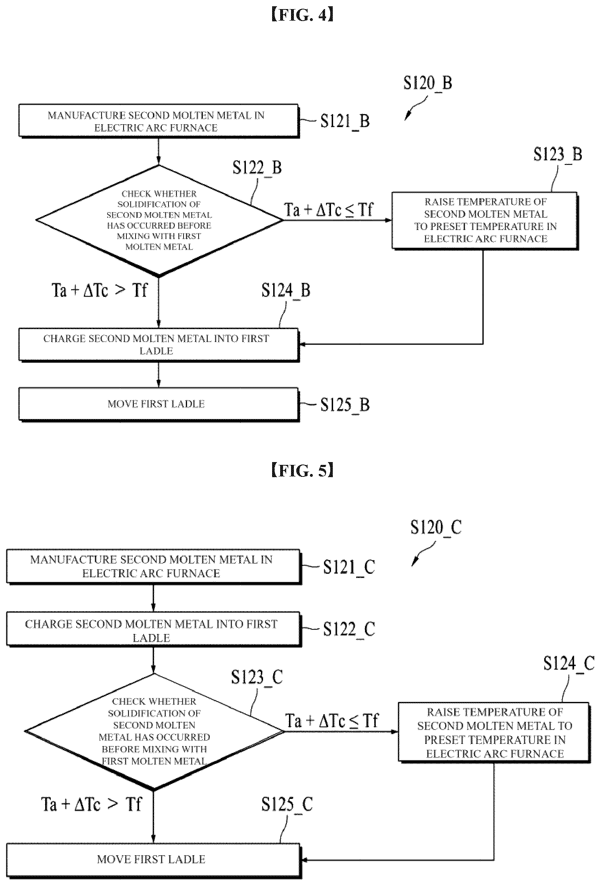

Referring to FIG. 4, a step of preparing the second molten metal (S120_B) includes a step of preparing the second molten metal (S12 _B), the step of checking whether solidification has occurred (S122 _B), the step of charging the second molten metal (S124 _B), and a step of moving the second molten metal (S 125 _B).

In the step of preparing the second molten metal (S121 _B), an electric arc furnace may be utilized. For example, the second raw material including iron scrap may be melted in the electric arc furnace to manufacture the second molten metal.

However, the present invention is not limited to what has been described above. The second raw material may be iron ore or reduced iron (e.g., DRI, HBI, and the like).

In the step of checking whether solidification has occurred (S122 _B), it is checked whether the second molten metal has solidified before the first molten metal and the second molten metal are mixed.

In the present embodiment, the step of checking whether solidification has occurred (S122_B) may be performed while the second molten metal is present in the electric arc furnace.

When $Ta + \Delta Tc \leq Tf$ is satisfied in step (S122_B), the step of raising the temperature of the second molten metal (S123_B) is performed. Step (S123_B) may be performed by the electric arc furnace.

Specifically, in step (S123_B), the temperature of the second molten metal is raised to a temperature higher than $Tf - \Delta Tc$ through the arc heat of the electric arc furnace.

That is, in step (S123_B), the temperature of the second molten metal is raised so that the temperature of the second molten metal at the time of mixing the first molten metal and the second molten metal is higher than the solidification temperature of the second molten metal. However, the heating method of the electric arc furnace is not limited to what has been described above.

When $Ta + \Delta Tc \leq Tf$ is satisfied in step (S122 _B), the step of raising the temperature of the second molten metal (S123_B) may be omitted.

After step (S122_B) (or step (S123_B)), the step of charging the second molten metal (124_B) and the step of moving the second molten metal (S125_B) may be performed.

According to the present embodiment, the step of preparing the second molten metal (S120_B) may further include a step of adding a deoxidizer to the second molten metal. The type and input amount of the deoxidizer may be the same as in the above-described embodiment (S120_A).

Referring to FIG. 5, a step of preparing the second molten metal (S120_C) includes a step of preparing the second molten metal (S121_C), a step of charging the second molten metal (S122_C), a step of checking whether solidification has occurred (S123_C), and a step of moving the second molten metal (S125_C).

In the step of preparing the second molten metal (S121_C), an electric arc furnace may be utilized. For example, the second raw material including iron scrap may be melted in the electric arc furnace to manufacture the second molten metal. That is, the second molten metal may be molten steel. A carbon content of the second molten metal may be 2 wt% or less based on the weight of the second molten metal.

In the step of charging the second molten metal (S122_C), the second molten metal melted in the electric arc furnace may be charged into a first ladle.

In the step of checking whether solidification has occurred (S123_C), it may be checked whether the second molten metal has solidified before the first molten metal and the second molten metal are mixed. Step (S123_C) may be performed while the second molten metal is charged into the first ladle.

For example, when $Ta + \Delta Tc \leq Tf$ is satisfied in step (S123_C), the step of raising the temperature of the second molten metal (S124_C) is performed. Step (S124_C) may be performed by the electric arc furnace.

Specifically, step (S124_C) may include a step of moving a first ladle containing the second molten metal to the electric arc furnace, a step of charging the second molten metal into the electric arc furnace, a step of raising the temperature of the second molten metal, and a step of re-charging the second molten metal whose temperature has been raised into the first ladle.

In the step of raising the temperature of the second molten metal, a temperature of the second molten metal is raised to a temperature higher than $Tf - \Delta Tc$ using the electric arc furnace. For example, the electric arc furnace may be utilized to raise the temperature of the second molten metal using arc heat.

That is, step (S124_C) raises the temperature of the second molten metal so that the temperature of the second molten metal at the time of mixing the first molten metal and the second molten metal is higher than the solidification temperature of the second molten metal. However, the heating method of the electric arc furnace is not limited to what has been described above.

When $Ta + \Delta Tc > Tf$ is satisfied, step (S124_C) may be omitted.

After step (S123_C) (or step (S124_C)), a step of moving the second molten metal (S125_C) may be performed.

According to the present embodiment, the step of preparing the second molten metal (S120_C) may further include a step of adding a deoxidizer to the second molten metal. The type and input amount of the deoxidizer may be the same as in the above-described embodiment (S120 A).

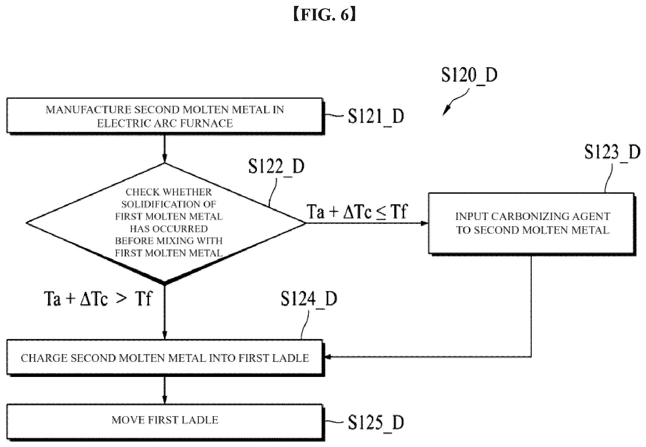

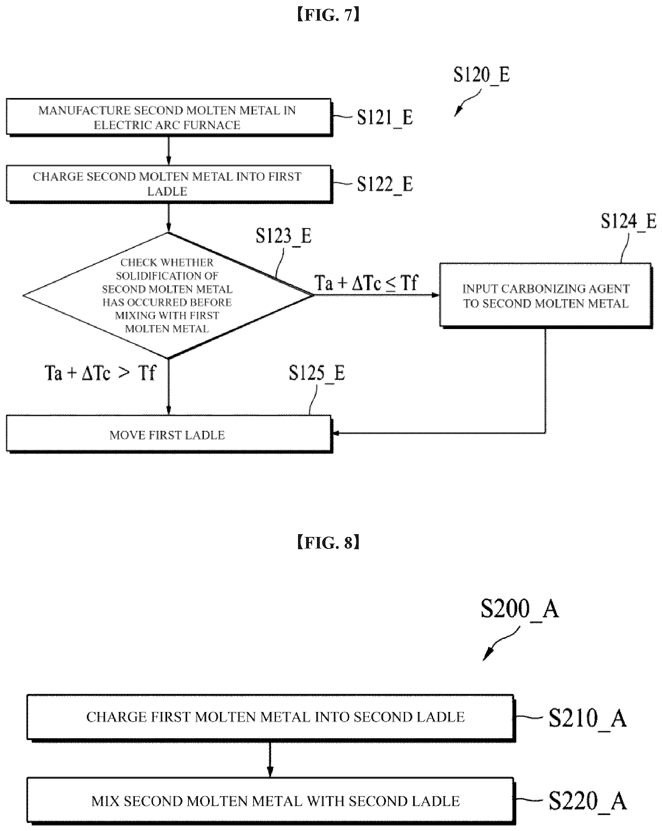

In the steps (S120_D, S120_E) of preparing the second molten metal as shown in FIGS. 6 and 7, a carbonizing agent may be added to the second molten metal to prevent solidification of the second molten metal.

Referring to FIG. 6, a step of preparing the second molten metal (S120_D) includes a step of preparing the second molten metal (S121_D), a step of checking whether solidification has occurred (S122_D), a step of charging the second molten metal (S124_D), and a step of moving the second molten metal (S125_D).

In the step of preparing the second molten metal (S121 _D), an electric arc furnace may be utilized. For example, the second raw material including iron scrap may be melted in the electric arc furnace to manufacture the second molten metal. That is, the second molten metal may be molten steel. A carbon content of the second molten metal may be 2 wt% or less based on the weight of the second molten metal.

In the step of checking whether solidification has occurred (S122_D), the temperature of the second molten metal is measured to check whether solidification of the second molten metal has started before it is mixed with the first molten metal.

When Ta + $\Delta$Tc ≤ Tf is satisfied, solidification of the second molten metal may start before it is mixed with the first molten metal.

In this case, a step of adding the carbonizing agent to the second molten metal (123_D) is performed. Step (123_D) adjusts the solidification temperature of the second molten metal after adding the carbonizing agent to be lower than Ta + $\Delta$Tc.

That is, in step (S123_D), the solidification temperature of the second molten metal is adjusted to be lower than the temperature of the second molten metal immediately before being mixed with the first molten metal.

After step (S122_D) (or step (S123D)), a step of charging the second molten metal into the first ladle (124_D) and a step of moving the second molten metal (S125_D) may be performed.

According to the present embodiment, the step of preparing the second molten metal (S120_D) may further include a step of adding a deoxidizer to the second molten metal. The type and input amount of the deoxidizer may be the same as in the above-described embodiment (S120_A).

Referring to FIG. 7, the step of preparing the second molten metal (S120_E) includes a step of preparing the second molten metal (S121_E), a step of charging the second molten metal (S122_E), a step of checking whether solidification has occurred (S123_E), and a step of moving the second molten metal (S125_E).

In the step of preparing the second molten metal (S121_E), an electric arc furnace may be utilized. For example, the second raw material including iron scrap may be melted in the electric arc furnace to manufacture the second molten metal. That is, the second molten metal may be molten steel. A carbon content of the second molten metal may be 2 wt% or less based on the weight of the second molten metal.

In the step of charging the second molten metal (S122_E), the second molten metal produced in the electric arc furnace may be charged into a first ladle.

In the step of checking whether solidification has occurred (S 123_E), the temperature of the second molten metal charged into the first ladle is measured to check whether solidification of the second molten metal has started before it is mixed with the first molten metal.

When Ta + $\Delta$ Tc ≤ Tf is satisfied, solidification of the second molten metal may start before it is mixed with the first molten metal.

In this case, a step of adding the carbonizing agent to the second molten metal (124_E) is performed. Step (123_D) adjusts the solidification temperature of the second molten metal after adding the carbonizing agent to be lower than Ta + $\Delta$Tc.

That is, in step (S124_E), the solidification temperature of the second molten metal is adjusted to be lower than the temperature of the second molten metal immediately before being mixed with the first molten metal.

After step (S123_E) (or step (S124_E)), a step of moving the second molten metal (S125_E) may be performed.

According to the present embodiment, the step of preparing the second molten metal (S120_E) may further include a step of adding a deoxidizer to the second molten metal. The type and input amount of the deoxidizer may be the same as in the above-described embodiment (S120_A).

FIGS. 8 to 10 are drawings showing various embodiments of the step of mixing the first molten metal and the second molten metal shown in FIG. 1.

Referring to FIG. 8, the step of mixing the first molten metal and the second molten metal (S200_A) includes a step of charging the first molten metal into a second ladle (S210_A) and a step of mixing the second molten metal into the second ladle (S220_A).

In step (S210_A), the second molten metal charged into the first transport vehicle is charged into the second ladle. The second ladle may be a vessel having an open top and a defined space therein. The second ladle may have a larger internal space than the first ladle.

In step (220_A), the second molten metal charged into the first ladle may be mixed into the second ladle. In the present embodiment, the second ladle may be a mixing ladle in which the first molten metal and the second molten metal are mixed.

Accordingly, in step (S200_A), a third molten metal may be manufactured by mixing the first molten metal and the second molten metal.

The third molten metal may contain 15 to 50 wt% of the second molten metal and the first molten metal as the remainder, based on the weight of the third molten metal.

When a proportion of the second molten metal is less than 15 wt%, the content of molten iron is high, and thus the effect of reducing carbon dioxide may be insufficient.

Conversely, when a proportion of the second molten metal exceeds 50 wt%, the molten iron, which is the main heat source during the converter operation, may be insufficient, and the subsequent converter operation may not be performed smoothly.

Hereinafter, embodiments other than the above-described embodiments will be described. For convenience of explanation, duplicate descriptions of the same configuration as the above-described embodiment are omitted in the following description.

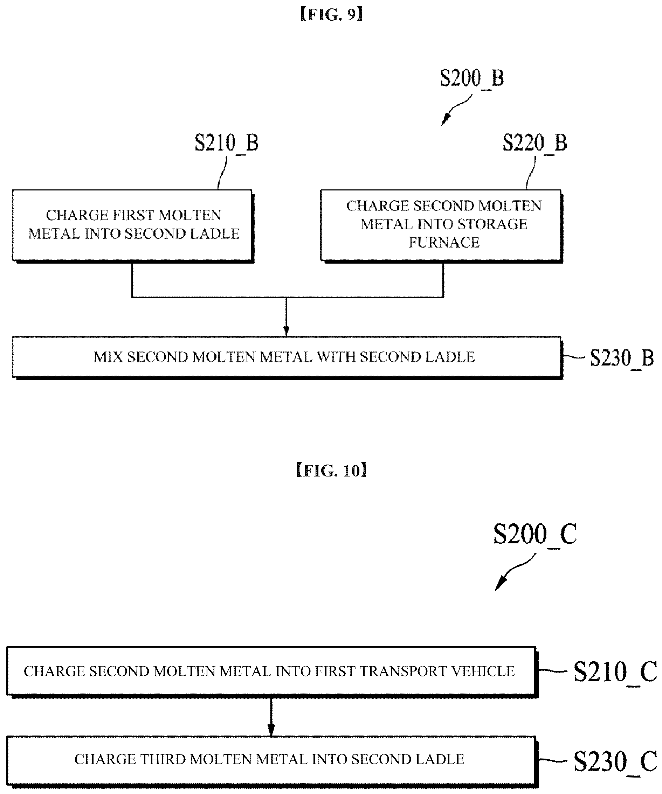

Referring to FIG. 9, a step of mixing the first molten metal and the second molten metal (S200_B) includes a step of charging the first molten metal into a second ladle (S210 _B), a step of charging the second molten metal into a storage furnace (220_B), and a step of mixing the second molten metal with the second ladle (S230 B).

In step (S210_B), the second molten metal charged into the first transport vehicle is charged into the second ladle.

In step (220_B), the second molten metal charged into the first ladle may be charged into the storage furnace. The storage furnace may have an internal space larger than that of the first ladle. Step (S220_B) may be performed separately from step (S210_B).

In step (S230 _B), at least a portion of the second molten metal charged into the storage furnace may be mixed into the second ladle. Accordingly, in step (S200 _B), a third molten metal may be manufactured by mixing the first molten metal and the second molten metal.

The third molten metal may contain 15 to 50 wt% of the second molten metal and the first molten metal as the remainder, based on the weight of the third molten metal.

Referring to FIG. 10, a step of mixing the first molten metal and the second molten metal (S200_C) includes a step of charging the second molten metal into the first transport vehicle (S210_C) and a step of charging the third molten metal into the second ladle (S220_C).

In step (S210_C), the second molten metal charged into the first ladle is charged into the first transport vehicle. Accordingly, the first molten metal and the second molten metal may be mixed in the first transport vehicle to manufacture the third molten metal.

That is, unlike the above-described embodiments (S200_A, 200_B), in the present embodiment, the first transport vehicle functions as a mixing ladle.

The third molten metal may contain 15 to 50 wt% of the second molten metal and the first molten metal as the remainder, based on the weight of the third molten metal.

In step (220_C), the third molten metal charged into the first transport vehicle may be charged into the second ladle.

Referring back to FIG. 1, in the step of adjusting the components of the third molten metal (S300), impurities (e.g., silicon, phosphorus, sulfur) in the third molten metal charged into the second ladle may be removed and the carbon content may be reduced to manufacture a fourth molten metal.

To this end, in step (S300), the third molten metal may undergo a pretreatment process, a converter process, and an LF process.

However, the present invention is not limited to what has been described above, and a vacuum degassing process, a BAP process, and the like may be additionally performed.

In a step of manufacturing a product (S400), a semi-finished product may be made with the fourth molten metal, and a finished product may be made with the semi-finished product.

Specifically, in step (S400), the fourth molten metal may be made into a semi-finished product by a continuous casting process. For example, the semi-finished product may be a slab or a billet. However, the semi-finished product is not limited thereto, and may be a bloom.

Subsequently, the semi-finished product may be made into the finished product by a rolling process. The rolling process may be a hot rolling process or a cold rolling process. The finished product may be steel plate or wire rod.

The method of manufacturing steel according to one embodiment of the present invention can significantly reduce an amount of carbon dioxide emissions generated during the steelmaking process by manufacturing steel by mixing a second molten metal (i.e., molten steel) with a first molten metal in an electric arc furnace, which emits relatively less carbon dioxide than the first molten metal (i.e., molten iron) produced in a blast furnace.

The method of manufacturing steel according to one embodiment of the present invention can prevent the problem of solidification of the second molten metal before the first molten metal and the second molten metal are mixed by raising the temperature of the second molten metal or adding a carbonizing agent.

The method of manufacturing steel according to one embodiment of the present invention can prevent explosions or overflow phenomena that may occur when the first molten metal and the second molten metal are mixed by adding a deoxidizer to the second molten metal.

As described above, preferred embodiments of the present invention have been described, and it will be apparent to those skilled in the art that the present invention may be embodied in other specific forms without departing from the spirit or scope thereof, in addition to the embodiments described above.

For example, in the above-described embodiments of the present invention, it was described that the temperature of the second molten metal is raised or a carbonizing agent is added to prevent solidification of the second molten metal produced in the electric arc furnace, but conversely, the temperature of the first molten metal may be raised or the carbonizing agent may be added to prevent solidification of the first molten metal produced in the blast furnace.

In addition, in the embodiments of the present invention described above, the first molten metal was described as molten iron produced in the blast furnace, but it is also possible to produce the first molten metal using an electric arc furnace.

That is, the above-described embodiments should be considered as illustrative rather than restrictive, and accordingly, the present invention is not limited to the above-described description but may be modified within the scope of the appended claims and their equivalents.

**Claims**

1. A method of manufacturing steel, comprising:

   preparing a first molten metal manufactured using a first raw material including iron ore and a second molten metal manufactured using a second raw material including iron scrap;
   mixing the first molten metal and the second molten metal to manufacture a third molten metal;
   adjusting components of the third molten metal to manufacture a fourth molten metal; and
   manufacturing a product by processing the fourth molten metal.

2. The method of claim 1, wherein the step of preparing the second molten metal includes:

   melting the second raw material in an electric arc furnace to manufacture the second molten metal;
   charging the second molten metal into a first ladle having an open top and a defined space portion therein;
   checking whether the second molten metal has solidified; and
   moving the first ladle, and
   in the step of checking whether the second molten metal has solidified,
   Ta is defined as a temperature of the second molten metal at the time of measurement,
   Tf is defined as a solidification temperature of the second molten metal depending on a carbon content,
   $\Delta$Tc is defined as a temperature change amount in which the second molten metal is cooled from the time of measurement to the time of mixing the first molten metal and the second molten metal, and
   when Ta + $\Delta$Tc $\leq$ Tf is satisfied, a temperature of the second molten metal is raised to Tf - $\Delta$Tc or higher through an LF refining machine.

3. The method of claim 1, wherein the step of preparing the second molten metal includes:

   melting the second raw material in an electric arc furnace to manufacture the second molten metal;
   checking whether the second molten metal has solidified;
   charging the second molten metal into a first ladle having an open top and a defined space therein; and
   moving the first ladle, and
   in the step of checking whether the second molten metal has solidified,
   Ta is defined as a temperature of the second molten metal at the time of measurement,
   Tf is defined as a solidification temperature of the second molten metal depending on a carbon content,
   $\Delta$Tc is defined as a temperature change amount in which the second molten metal is cooled from the time of measurement to the time of mixing the first molten metal and the second molten metal, and
   when Ta + $\Delta$Tc $\leq$ Tf is satisfied, a temperature of the second molten metal is further raised to Tf - $\Delta$Tc or higher in an electric arc furnace.

4. The method of claim 1, wherein the step of preparing the second molten metal includes:

   melting the second raw material in an electric arc furnace to manufacture the second molten metal;
   adding a deoxidizer to the second molten metal;
   charging the second molten metal into a first ladle having an open top and a defined space portion therein;
   checking whether the second molten metal has solidified; and
   moving the first ladle, and
   in the step of checking whether the second molten metal has solidified,
   Ta is defined as a temperature of the second molten metal at the time of measurement;
   Tf is defined as a solidification temperature of the second molten metal depending on a carbon content,
   $\Delta$Tc is defined as a temperature change amount in which the second molten metal is cooled from the time of measurement to the time of mixing the first molten metal and the second molten metal, and

when Ta + ΔTc ≤ Tf is satisfied, a temperature of the second molten metal is raised to Tf - ΔTc or higher.

5. The method of claim 1, wherein the step of preparing the first molten metal includes:

melting the first raw material in a blast furnace to manufacture the first molten metal;
charging the first molten metal into a first transport vehicle; and
moving the first transport vehicle,
the step of preparing the second molten metal includes:

melting the second raw material in an electric arc furnace (EAF) to manufacture the second molten metal; and
selectively adding a carbonizing agent depending on whether the second molten metal has solidified, and
the step of manufacturing the third molten metal includes charging the second molten metal into the first transport vehicle.

6. The method of claim 1, wherein the step of preparing the second molten metal includes selectively adding a carbonizing agent depending on whether the second molten metal has solidified, and
the step of manufacturing the third molten metal includes charging the second molten metal charged into a storage furnace into a mixing ladle into which the first molten metal has been charged.

7. The method of claim 1, wherein the step of preparing the first molten metal includes:

melting the first raw material in a blast furnace to manufacture the first molten metal;
charging the first molten metal into a first transport vehicle; and
moving the first transport vehicle,
the step of preparing the second molten metal includes:

melting the second raw material in an electric arc furnace (EAF) to manufacture the second molten metal; and
selectively adding a carbonizing agent depending on whether the second molten metal has solidified, and
the step of manufacturing the third molten metal includes:

charging the first molten metal into a mixing ladle having an open top and a defined space therein; and
charging the second molten metal into the mixing ladle.

8. A method of manufacturing steel, comprising:

preparing a first molten metal containing carbon and a second molten metal containing carbon at a lower concentration than the first molten metal;
mixing the first molten metal and the second molten metal to manufacture a third molten metal;
adjusting components of the third molten metal to manufacture a fourth molten metal; and
manufacturing a product by processing the fourth molten metal.

9. The method of claim 8, wherein the step of preparing the second molten metal includes:

charging the second molten metal into a first ladle having an open top and a defined space portion therein;
raising a temperature of the second molten metal charged into the first ladle through an LF refining machine; and
moving the first ladle, and
the temperature raising step adjusts a temperature of the second molten metal so that a temperature of the second molten metal at the time of mixing the first molten metal and the second molten metal is higher than a solidification temperature of the second molten metal.

10. The method of claim 8, wherein the step of preparing the second molten metal includes:

further raising a temperature of the second molten metal in an electric arc furnace;
charging the second molten metal into a first ladle having an open top and a defined space portion therein; and
moving the first ladle, and
the additional temperature raising step adjusts a temperature of the second molten metal so that a measurement temperature of the second molten metal at the time of mixing the first molten metal and the second molten metal is higher than a solidification temperature of the second molten metal.

**11.** The method of claim 8, wherein the step of preparing the second molten metal includes:

adding a deoxidizer to the second molten metal;
charging the second molten metal into a first ladle having an open top and a defined space portion therein;
raising a temperature of the second molten metal charged into the first ladle; and
moving the first ladle, and
the temperature raising step adjusts a temperature of the second molten metal so that a measurement temperature of the second molten metal at the time of mixing the first molten metal and the second molten metal is higher than a solidification temperature of the second molten metal.

**12.** The method of claim 8, wherein the step of preparing the first molten metal includes:

charging the first molten metal into a first transport vehicle; and
moving the first transport vehicle,
the step of preparing the second molten metal includes selectively adding a carbonizing agent depending on whether the second molten metal has solidified, and
the step of manufacturing the third molten metal includes charging the second molten metal into the first transport vehicle.

**13.** The method of claim 8, wherein the step of preparing the second molten metal includes selectively adding a carbonizing agent depending on whether the second molten metal has solidified, and
the step of manufacturing the third molten metal includes charging the second molten metal charged into a storage furnace into a mixing ladle into which the first molten metal has been charged.

**14.** The method of claim 8, wherein the step of preparing the first molten metal includes:

charging the first molten metal into a first transport vehicle; and
moving the first transport vehicle,
the step of preparing the second molten metal includes selectively adding a carbonizing agent depending on whether the second molten metal has solidified, and
the step of manufacturing the third molten metal includes:

charging the first molten metal into a mixing ladle having an open top and a defined space therein; and
charging the second molten metal into the mixing ladle.

**15.** The method of claim 8, wherein a carbon content of the first molten metal is 2 wt% or more, and
a carbon content of the second molten metal is 2 wt% or less.

**16.** The method of claim 8, wherein the third molten metal includes 15 to 50 wt% of the second molten metal and the first molten metal as the remainder.

【FIG. 1】

| | |
|---|---|
| PREPARE FIRST MOLTEN METAL AND SECOND MOLTEN METAL | S100 |

↓

| | |
|---|---|
| MIX FIRST MOLTEN METAL AND SECOND MOLTEN METAL | S200 |

↓

| | |
|---|---|
| ADJUST COMPONENTS OF THIRD MOLTEN METAL | S300 |

↓

| | |
|---|---|
| MANUFACTURE PRODUCT | S400 |

【FIG. 2】

S100

S110          S120

S111 — MANUFACTURE FIRST MOLTEN METAL

S112 — CHARGE FIRST MOLTEN METAL

S113 — MOVE FIRST MOLTEN METAL

MANUFACTURE SECOND MOLTEN METAL

PROCESS SECOND MOLTEN METAL

MOVE SECOND MOLTEN METAL

MIX FIRST MOLTEN METAL AND SECOND MOLTEN METAL ~ S200

【FIG. 3】

S120_A

MANUFACTURE SECOND MOLTEN METAL IN ELECTRIC ARC FURNACE ~ S121_A

CHARGE SECOND MOLTEN METAL INTO FIRST LADLE ~ S122_A

S123_A
CHECK WHETHER SOLIDIFICATION OF SECOND MOLTEN METAL HAS OCCURRED BEFORE MIXING WITH FIRST MOLTEN METAL

$Ta + \Delta Tc \leq Tf$

S124_A
RAISE TEMPERATURE OF SECOND MOLTEN METAL TO PRESET TEMPERATURE IN LF

$Ta + \Delta Tc > Tf$

S125_A

MOVE FIRST LADLE

【FIG. 4】

S120_B

MANUFACTURE SECOND MOLTEN METAL IN ELECTRIC ARC FURNACE — S121_B

S122_B

CHECK WHETHER SOLIDIFICATION OF SECOND MOLTEN METAL HAS OCCURRED BEFORE MIXING WITH FIRST MOLTEN METAL

$Ta + \Delta Tc \leq Tf$

S123_B

RAISE TEMPERATURE OF SECOND MOLTEN METAL TO PRESET TEMPERATURE IN ELECTRIC ARC FURNACE

$Ta + \Delta Tc > Tf$

S124_B

CHARGE SECOND MOLTEN METAL INTO FIRST LADLE

MOVE FIRST LADLE — S125_B

【FIG. 5】

S120_C

MANUFACTURE SECOND MOLTEN METAL IN ELECTRIC ARC FURNACE — S121_C

CHARGE SECOND MOLTEN METAL INTO FIRST LADLE — S122_C

S123_C

CHECK WHETHER SOLIDIFICATION OF SECOND MOLTEN METAL HAS OCCURRED BEFORE MIXING WITH FIRST MOLTEN METAL

$Ta + \Delta Tc \leq Tf$

S124_C

RAISE TEMPERATURE OF SECOND MOLTEN METAL TO PRESET TEMPERATURE IN ELECTRIC ARC FURNACE

$Ta + \Delta Tc > Tf$

S125_C

MOVE FIRST LADLE

【FIG. 6】

S120_D

MANUFACTURE SECOND MOLTEN METAL IN ELECTRIC ARC FURNACE — S121_D

CHECK WHETHER SOLIDIFICATION OF FIRST MOLTEN METAL HAS OCCURRED BEFORE MIXING WITH FIRST MOLTEN METAL — S122_D

$Ta + \Delta Tc \leq Tf$ → INPUT CARBONIZING AGENT TO SECOND MOLTEN METAL — S123_D

$Ta + \Delta Tc > Tf$

CHARGE SECOND MOLTEN METAL INTO FIRST LADLE — S124_D

MOVE FIRST LADLE — S125_D

【FIG. 7】

S120_E

MANUFACTURE SECOND MOLTEN METAL IN ELECTRIC ARC FURNACE — S121_E

CHARGE SECOND MOLTEN METAL INTO FIRST LADLE — S122_E

CHECK WHETHER SOLIDIFICATION OF SECOND MOLTEN METAL HAS OCCURRED BEFORE MIXING WITH FIRST MOLTEN METAL — S123_E

$Ta + \Delta Tc \leq Tf$ → INPUT CARBONIZING AGENT TO SECOND MOLTEN METAL — S124_E

$Ta + \Delta Tc > Tf$

MOVE FIRST LADLE — S125_E

【FIG. 8】

S200_A

CHARGE FIRST MOLTEN METAL INTO SECOND LADLE — S210_A

MIX SECOND MOLTEN METAL WITH SECOND LADLE — S220_A

[FIG. 9]

S200_B

S210_B

S220_B

CHARGE FIRST MOLTEN
METAL INTO SECOND LADLE

CHARGE SECOND MOLTEN
METAL INTO STORAGE
FURNACE

MIX SECOND MOLTEN METAL WITH SECOND LADLE — S230_B

[FIG. 10]

S200_C

CHARGE SECOND MOLTEN METAL INTO FIRST TRANSPORT VEHICLE — S210_C

CHARGE THIRD MOLTEN METAL INTO SECOND LADLE — S230_C

## INTERNATIONAL SEARCH REPORT

| International application No. |
| --- |
| **PCT/KR2023/011203** |

### A.    CLASSIFICATION OF SUBJECT MATTER

**C21C 7/00**(2006.01)i; **C21C 7/06**(2006.01)i; **C21C 5/52**(2006.01)i; **C21C 1/06**(2006.01)i; **C21B 5/04**(2006.01)i; **C21B 5/02**(2006.01)i

According to International Patent Classification (IPC) or to both national classification and IPC

### B.    FIELDS SEARCHED

Minimum documentation searched (classification system followed by classification symbols)

C21C 7/00(2006.01); C21B 13/00(2006.01); C21B 13/12(2006.01); C21C 1/02(2006.01); C21C 5/52(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 철광석(iron ore), 철 스크랩(iron scrap), 용탕(molten metal), 혼합(mixing), 고로 (furnace), 전기로(electric furnace), 승온(heating)

### C.    DOCUMENTS CONSIDERED TO BE RELEVANT

| Category* | Citation of document, with indication, where appropriate, of the relevant passages | Relevant to claim No. |
| --- | --- | --- |
| X | 손호상. 철스크랩의 리사이클링. RESOURCES RECYCLING. 29 February 2020, Vol. 29, No. 1, pp. 3-16 (SOHN, Ho-Sang. Recycling of Ferrous Scraps.)<br>See pages 6 and 12; and figure 4. | 1-16 |
| A | KR 10-2016-0099748 A (POSCO) 23 August 2016 (2016-08-23)<br>See paragraphs [0027]-[0037]; and figure 1. | 1-16 |
| A | KR 10-2014-0090709 A (POSCO et al.) 18 July 2014 (2014-07-18)<br>See claim 1. | 1-16 |
| A | KR 10-2004-0056268 A (POSCO et al.) 30 June 2004 (2004-06-30)<br>See claim 5; and figure 1. | 1-16 |
| A | KR 10-2015-0113432 A (HYUNDAI STEEL COMPANY) 08 October 2015 (2015-10-08)<br>See paragraphs [0007]-[0013]. | 1-16 |

☐ Further documents are listed in the continuation of Box C.          ☑ See patent family annex.

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 October 2023** | **30 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 596 724 A1

## INTERNATIONAL SEARCH REPORT
### Information on patent family members

International application No.

**PCT/KR2023/011203**

| Patent document cited in search report | | | Publication date (day/month/year) | Patent family member(s) | | | Publication date (day/month/year) |
|---|---|---|---|---|---|---|---|
| KR | 10-2016-0099748 | A | 23 August 2016 | KR | 10-1663189 | B1 | 07 October 2016 |
| KR | 10-2014-0090709 | A | 18 July 2014 | None | | | |
| KR | 10-2004-0056268 | A | 30 June 2004 | KR | 10-0931229 | B1 | 10 December 2009 |
| KR | 10-2015-0113432 | A | 08 October 2015 | None | | | |

Form PCT/ISA/210 (patent family annex) (July 2022)